# EUROPEAN PATENT APPLICATION

(11) **EP 1 247 782 A2**
(43) Date of publication of application: **09.10.2002**
(21) Application number: 02005574.5
(22) Date of filing: 12.03.2002
(51) Int. Cl.: C03B 8/02, C03B 37/016

(54) **Dispersal of optically active ions in glass**

(30) Priority: 06.04.2001 US 827564
(71) Applicant: CORNING INCORPORATED, Corning, N.Y. 14831 (US)
(72) Inventor: Ellison, Adam James Gillmar, Corning, NY 14830 (US); McEnroe, David John, Corning, NY 14830 (US)
(74) Representative: Poole, Michael John

(57) **Abstract**

A method for the production of glass suitable for use in an optical fiber, by (1) dissolving an optically active component in a solvent to form a solution; (2) mixing the solution and a powder substrate, wherein the powder substrate is insoluble in the solvent; and (3) melting the solution and powder substrate to form glass at a temperature or temperature range that causes melt viscosities at less than or equal to 100,000 poise. A glass made by such a method and an optical fiber comprising such a glass. An optical fiber having optically active ions having an unbleachable loss of 1% or less of the peak of absorption. Also, a method for the production of composition suitable for melting into a glass suitable for use in an optical fiber, by (1) dissolving an optically active component in a solvent to form a solution, wherein the optically active component is soluble in the solvent; and (2) mixing the solution and a powder substrate, wherein the powder substrate is insoluble in the solvent, and a composition made by such a method.

## Description

### BACKGROUND OF THE INVENTION

### 1. Field Of The Invention

This invention relates to a method for dispersing optically active ions in a glass, in which the glass is formed by direct melting of batch components and a glass with highly dispersed optically active ions.

### 2. Description of Related Art

Fiber amplifiers and fiber lasers operate on the fundamental principle of amplifying guided light of a particular frequency or range of frequencies (the signal) through stimulated emission of radiation of an optically active ion. The optically active ion is typically a rare earth element, though transition metals have also been employed in lasers. Stimulated emission of the optically active ion is achieved by pumping it with light at a wavelength different than that of the signal. The pump wavelength is generally higher in energy (shorter in wavelength) than that of the signal, though alternative schemes may also work for particular optically active ions. In relaxing to its ground state, the optically active ion gives off light at a frequency equivalent to the signal, which in turn interferes constructively with the signal and increases the strength of the signal.

It is usually the case―though not required―that the core alone is doped with the optically active ion. This is because in a single mode fiber, most of the intensity of both the pump and the signal is concentrated in the immediate vicinity of the core. Surrounding the core is a clad with lower refractive index than the core. Signal light injected into the end of the fiber preferentially passes down the core. Pump light from a laser source excites the active ion in the core at a specific wavelength. The pump laser operates continuously to maintain a consistent population inversion of the optically active ion. When a weak signal at the signal wavelength enters the fiber core, it stimulates emission, which amplifies its strength. A single initial photon at the emission wavelength stimulates emission of a second photon, and each of those photons stimulates emission from other active ion atoms. This results in a higher power (more photons) at the emission wavelength, which is seen as amplification.

The difference between a fiber laser and fiber amplifier is that a fiber laser is an oscillator, which generates its own signal with no external input other than the pump energy. The amplifier requires an input signal to produce an output signal. A fiber laser like an amplifier uses stimulated emission and basically has coated ends to act as mirrors which reflects or transmits the pump and laser wavelengths depending on the system criteria.

Fiber amplifiers and lasers are key components for fiber-optic systems since they have the ability to directly amplify optical signals without converting the signal to electronic form that is amplified and then converting the signal back to an optical form. The amplification performance is dependent on several factors such as pump energy, dopant levels, length of the fiber and wavelength. A phenomenon know as ion clustering can cause cross relaxation between ions which attributes to unbleachable loss in the amplifier. By increasing the dispersion of the optically active ions in the glass matrix the unbleachable loss in the amplifier can be reduced or eliminated and a more efficient amplifier fiber made.

In general, efficient fiber optical amplifiers and fiber lasers require very few optically active ions to achieve substantial amplification. For example, the fiber used to construct an erbium-based fiber amplifier intended to generate 40 dB of internal gain will incorporate approximately 3x10¹⁵ erbium ions/cc in the core, compared to a typical erbium loading of 3x10¹⁸ to 3x 10¹⁹ ions/cc. The typical erbium concentration in the core of an erbium-doped fiber amplifier (EDFA) is 3x10¹⁸ to 3x10¹⁹ ions/cc, but only about 3x10¹⁵ erbium ions are required to obtain 40 dB of small signal gain, an amount of gain typical of conventional band erbium fiber amplifiers. Therefore, performance of the entire amplifier relies on the homogeneous distribution of erbium ions in approximately 10⁻³ to 10⁻⁴ cc of core glass. This makes it preferable to distribute these ions as homogeneously as possible throughout the core glass. Thus, the entire amplifier relies on homogeneous distribution of erbium ions in approximately 10⁻³ to 10⁻⁴ cc of core glass.

Product consistency requires that the optically active ions in the core of a fiber laser or amplifier are distributed as homogeneously as possible, or else the same fiber sampled at different positions will produce different amounts of gain. If the gain obtained within a particular reel of fiber varies from one point to the next, then pump requirements, filter depths, etc., will also vary depending upon where the fiber is sampled. This would add great complexity and cost to the process of assembling a fiber amplifier.

The volumes of core material required to produce adequate gain are small compared to the length scales typical of CVD lay down processes or the much larger scales of typical chemical reagents used in batch melting. As a result, ensuring homogeneous distributions of optically active ions in core materials is a considerable challenge, particular when the core glasses are obtained from molten precursors. In the particular case of optically active rare earth element dopants, close proximity with respect to one another can in some cases produce non-radiative energy transfers between ions, referred to here as intra-ionic cross relaxation. This process has also been referred to as ion clustering. Intra-ionic cross relaxation preferably consumes pump power to produce gain equivalent to that which would occur without cross relaxation. Also preferably, in electronic transitions involving the ground and first excited state, cross relaxation may produce attenuation within the desired amplification wavelength, an attribute referred to here as unbleachable loss. Examples of rare earth element ions that show this type of cross relaxation include erbium, praseodymium, and neodymium, all potentially desirable for optical amplifier applications.

When glasses are formed via direct melting of macroscopic batch materials, the conventional means of batching optically active components would be in the form of simple compounds in which they are major constituents, i.e., as oxides, nitrates, halides, etc. In these forms, interatomic distances are so small that cross-relaxation is a near certainty. As these particles dissolve into the melt, their constituents diffuse away from the original particle boundaries. However, remnants of the original atomic distributions must be eliminated if cross-relaxation is to be avoided, and this is impossible to guarantee for an optically active component originating from a macroscopic source. Thus, there exists a need for an optical fiber whose dopants, especially rare earth element dopants, are distributed in such a way as to minimize the likelihood of non-radiative cross relaxation. There likewise exists a need for a method to maximize the probability of obtaining such a distribution. There likewise exists a need for this method to be applicable to glasses obtained from melts, i.e., homogenous liquids with minimum viscosities of 100,000 poise or less.

### BRIEF SUMMARY OF THE INVENTION

In one embodiment of the present invention there is disclosed a method for the production of glass suitable for use in an optical fiber, by (1) dissolving an optically active component in a solvent to form a solution; (2) mixing the solution and a powder substrate, wherein the powder substrate is insoluble in the solvent; and (3) melting the solution and powder substrate to form glass at a temperature or temperature range that causes melt viscosities at less than or equal to 100,000 poise. Another embodiment is a glass made by such a method and yet another embodiment is an optical fiber comprising such a glass.

Another embodiment is an optical fiber having optically active ions having an unbleachable loss of 1% or less of the peak of absorption.

Yet another embodiment is a method for the production of a composition suitable for melting into a glass suitable for use in an optical fiber, by (1) dissolving an optically active component in a solvent to form a solution, wherein the optically active component is soluble in the solvent; and (2) mixing the solution and a powder substrate, wherein the powder substrate is insoluble in the solvent. Another embodiment is a composition made by such a method.

### DETAILED DESCRIPTION OF THE INVENTION

The invention described herein includes a method for maximizing, or nearly maximizing, interatomic separations between optically active ions in a melted glass. Optically active ions are defined as elements that in ionic form have partially-filled d-or f-atomic orbitals that can be stimulated with light so as to produce emission at ultraviolet, visible, or infrared wavelengths. Examples of optically active ions include transition elements ions such as Ti³⁺, V³⁺, Cr³⁺ and Cr⁴⁺, and Ni²⁺; and the rare earth element ions Pr³⁺, Nd³⁺, Sm³⁺, Eu²⁺ and Eu³⁺, Tb³⁺, Dy³⁺, Ho³⁺, Er³⁺, Tm³⁺, and Yb³⁺. An example of stimulated emission is pumping a glass doped with Yb³⁺ ions with a 920 nm laser to obtain stimulated emission at 980 nm. The emission can be measured with a semicondutor photodetector such as an InGaAs, InGaSb, or liquid-nitrogen-cooled germanium detector. Certain ions will be optically active only in particular circumstances. For example, Ti³⁺ shows strong stimulated emission when it occupies a site with a strong crystal field, such as a site normally occupied by aluminum in a saphire laser material.

In one preferred embodiment of the present invention, optically active ions are dissolved in solution, dispersed over powdered batch materials, and the batch is subsequently melted. This method is advantageous for several reasons for high-performance fiber lasers, fiber amplifiers, and planar devices requiring optically active ions. First, variability in the concentration of the dopant is minimized, ensuring consistent gain along the length of any particular fiber, and consistent gain per unit length every time the same core glass is used to make fiber. Examples are provided of the implementation of this invention to minimize erbium and ytterbium ion-ion cross relaxation in antimony silicate fibers.

Briefly, one aspect of the invention entails dissolution of optically active ions and, if used, co-dopants in a solution. The solution is thoroughly mixed with a major particulate batch component that is preferably insoluble or highly insoluble in the solvent. The batch component is optionally dried, and it and the remaining batch materials (if present) are mixed together. The complete batch is then melted. As used herein, the term powder substrate means the batch material that is mixed with the optically active component and serves to separate and homogenize the optically active component.

### I. Dissolution of the Optically Active Component.

The optically active component is preferably available in a precursor form that is soluble in a solvent that will not dissolve the powder substrate. An example of a suitable selection of optically active precursor, solvent, and powder substrate is erbium chloride hydrate for the precursor, water for the solvent, and finely-ground vitreous silica for the powder substrate. The best solvent will dissolve a relatively large amount of the optically active component, as this provides greatest flexibility in combining solution with the powder substrate. For example, erbium chloride hydrate is soluble in water at least to the extent of one gram per gram of water, producing a highly concentrated solution, which for ErCl₃•6H₂O is a 0.047 molar solution. If a solvent with relatively low solubility of the precursor is all that can be used, then multiple dopings can be used to achieve the desired concentration of dopant.

One of ordinary skill in the art will appreciate that when the powder substrate is doped with an optically active ion, the dopant will be added in such an amount that it substantially dissolves in the solution, preferably more than 99%.
If a co-dopant is to be added to the solution as well, then it is preferable if the co-dopant does not cause precipitation of a phase containing the optically active ion, e.g. the precursor component itself or a derivative compound. For example, erbium chloride hydrate and aluminum chloride hydrate can be co-doped together such that the combined mass of precursor and co-dopant solute is at least equal to the mass of water. This can also be calculated as a molarity is 0.105 for AlCl₃•6H₂O and 0.047 for ErCl₃•6H₂O.

Preferably, the ion is dissolved into the solvent at the same temperature at which the solute and solvent mixture will be combined with the powder substrate. For example, if mixing is to occur at room temperature, then the ion of interest is dissolved into a solvent and left to equilibrate at room temperature. If a co-dopant is to be added, then it is best if it is also equilibrated with the solution at the same temperature as will be used in mixing.

Precursors include, but are not limited, inorganic salts such as nitrates, sulfates, and halides, organic salts such as formates, acetates, and oxalates, organometallic compounds such as alkoxides, and Grinard reagents and others.
Solvents include, but are not confined to, water, alcohols, ketones, aldehydes, organic and inorganic acids, bases, liquid ammonia, molten salts and others.
Powder substrates include any inorganic or organic material, including any individual batch component such as powdered oxides, halides, and chalcogenides, any combination of batch components, or a crushed or milled glass having one or more of the batch components to be present in the final glass. In general, smaller powders have higher surface area, so the concentration per unit area decreases, generally a desirable trend. Powders from 100 nanometer soot particles to 325 micron sand grains have been successfully used for the present invention. Powder substrates from a particle size of about 50 to about 1200 mesh are suitable for use with the present invention. Powder substrates are preferably insoluble in the solvent, with no more than 10% of the substrate dissolving in the solvent, and preferably with less than 1% of the substrate dissolving.

### II. Mixing the Solution and Powder Substrate.

The preferred ratio of solvent mixture to powder substrate will vary from solvent to solvent, and will also be affected by the particle size of the powder substrate. For example, one preferred embodiment is powder substrates with standard sorted particle sizes of about 50 to about 325 mesh, and for solution/powder substrate mass ratios of about 0.5% to about 10%. If the solution volume is too high, pooling of the solution, and therefore heterogeneous distributions of the optically active component can occur. A preferred volume of solution is combined with the powder substrate to distribute the optically active ion precursor over the entire surface of the powder substrate. Any mixing approach that distributes the solution well over the powder substrate will suffice. For example, a preferred approach is to combine the solution and powder substrate together in a container with cylindrical geometry, then place the cylinder on a roller mill and rolled it at 50 rpm for 2-12 hours is a good approach.

### III. Drying and Decomposition.

It is generally desirable, though not necessary, to drive off the solvent from the powder substrate and, if appropriate, to decompose the optically active precursor. As an example of drying, erbium chloride hydrate dissolved in water and distributed over crushed silica can be dried by heating the doped powder substrate at 450°C for 12 hours. Organic solvents, such as alcohols or ketones, can be dried with lower temperatures or flowing oxygen to ensure sufficient removal/decomposition. As an example of decomposing the optically active precursor, erbium nitrate hydrate dissolved in water and distributed over a crushed silica powder substrate can be decomposed to the oxide by heating the doped powder substrate at 450°C for 12 hours. Partial decomposition, such as chloride hydrate decomposing to chloride, may be desirable for particular applications, such as providing a flux during the early stages of melting.

If the optically active component has low solubility in the solvent, the powder substrate can be re-doped with the optically active component―i.e., dissolved and mixed―as many times as necessary to obtain the appropriate doping level. If desired, the optically active component can be intermittently co-doped with a non-active component to add another level of dilution to the system.

### IV. Mixing with remaining batch materials and melting.

To increase the uniformity of the distribution of the optically active ion in the final glass, it is preferred that the particulate nature of the powder substrate be maintained after any mixing or drying step, if other batch materials are to be added to it. This is because if the powder substrate welds together, it will not mix uniformly with the remaining batch materials. If the powder substrate itself melts directly into a uniform liquid, then additional batch components may not be an issue, and extensive welding of the powder substrate may be tolerable. However, to avoid build-up of solvent at contact points, it is generally best to avoid welding where possible. Contact points are defined as places where adjacent grains make contact with one another. If welding at contact points occurs in a powder substrate that is, itself, a batch material, then it will be more difficult to combine and homogenize with other batch materials.

The powder substrate can be combined with the remaining batch materials by any method familiar to those in the art, such as rolling, ball-milling, turbulent mixing, etc. Once combined, the complete batch is melted like any other batch material. If the melt viscosity is high, then low diffusivity of the optically-active component may work against the advantageous distribution achieved in the previously mentioned in Steps I-II and optional Step III. In this case, it may be desirable to employ longer melt times than would typically be required to obtain a uniform glass. For example, the inventors have found that in erbium-doped antimony silicate glasses (2 to 3x10¹⁹ Er ions/cc) that uniform erbium ion distributions are obtained when the ratio of melt viscosity to melt duration (hours) is roughly 25, e.g., 4 hours at 100 poise viscosity, 10 hours at 250 poise viscosity, 20 hours at 500 poise viscosity, etc. The melting the solution and powder substrate to form glass is preferably done at a temperature or temperature range that causes melt viscosities at less than or equal to 100,000 poise, more preferably less than or equal to 20,000 poise and most preferably less than or equal to 2,000 poise. The relationship between temperate and melt viscosity is well know in the art. After melting, the melt is poured to quench or is drawn or cast to form using standard methods familiar to those in the field of glass technology.

Melted glasses can be drawn to fibers by various routes. The most common of these are rod-in-tube and double crucible. In the rod-in-tube method, a rod of core glass is inserted into a tube of clad glass. This assembly is referred to collectively as a "preform." The preform is suspended in a furnace and heat is applied until the preform necks off, forming a narrow fiber with the same geometry as the original preform. The fiber is pulled at a temperature and at a rate that produces the desired fiber diameter. Double crucible fiberization employs nested crucibles with orifices at their bases. The core is loaded into the interior crucible and the clad into the exterior crucible, and both orifices are plugged. Heat is applied to melt the glasses into homogeneous liquids. The orifices are unplugged and the glass is allowed to drain out at a controlled rate. The core-clad fiber is formed directly from the melted glasses so drawn. In the double crucible method, it is possible that the core, the clad, or both could originate from batch materials rather than from re-melted glasses.

### EXAMPLE 1

The following example is for solution doping erbium oxide into a ternary antimony silicate glass. 7.95 g of erbium nitrate hydrate, Er(NO₃)₃•5H₂O, was weighed and added to 8 g of 15 MΩ deionized water in a teflon beaker. A teflon-coated magnetic stir bar was added to the beaker and the solution was stirred for 20 minutes, until clear. The solution was added to 1000 g of 100 mesh high purity sand (SiO₂) in a 2 liter wide-mouth plastic bottle. The bottle was capped, sealed shut with tape, and placed on a roller mill. The mill turned the bottle at 50 rpm for 2 hours. The doped sand was transferred to an 1800 cc fused silica crucible, covered, and then placed in a furnace at 450°C. After 24 hours, the crucible was removed from the furnace and allowed to cool to room temperature. Then, 462 grams of the doped sand were combined with 1339 grams of high-purity antimony oxide and 57 grams of potassium bromide in a 2 liter plastic bottle. 462 grams of sand were used to obtain the desired glass stoichiometry. The bottle was capped, sealed with tape, and placed on a roller mill at 50 rpm for 12 hours. After rolling, the batch was transferred to an 1800 cc fused silica crucible, covered, and heated to 425°C for 16 hours to drive of residual water from the antimony oxide and potassium bromide. The batch was transferred to a furnace at 1425°C and held at temperature for 20 hours. The melt was then poured on a graphite plate, and the resulting patty of glass was annealed at 425°C.

### EXAMPLE 2

The following example is for solution doping erbium oxide and a 10x excess of aluminum chloride hydrate into a ternary antimony silicate glass. 3.79 g of erbium nitrate hydrate, Er(NO₃)₃•5H₂O, was weighed and added to 30 g of 0.1 N HNO₃ in a teflon beaker. A teflon-coated magnetic stir bar was added to the beaker and the solution was stirred. 22.6 of aluminum chloride hydrate, AlCl₃•CH₂O, was added to the solution. The solution was stirred 20 minutes, until clear. The solution was added to 500 g of 100 mesh high purity sand (SiO₂) in a 1 liter wide-mouth plastic bottle. The bottle was capped, sealed shut with tape, and placed on a roller mill. The mill turned the bottle at 50 rpm for 2 hours. The doped sand was transferred to a 600 cc fused silica crucible, covered, and was then placed in a furnace at 500°C. After 2 hours, the crucible was removed from the furnace and allowed to cool to room temperature. 214 grams of the doped sand was combined with 374 grams of high-purity antimony oxide and 24.7 grams of aluminum fluoride in a 1 liter plastic bottle. The bottle was capped, sealed with tape, and placed on a roller mill at 50 rpm for 12 hours. After rolling, the batch was transferred to a 600 cc fused silica crucible, covered, and heated to 425°C for 16 hours to drive of residual water from the antimony oxide and potassium bromide. The batch was transferred to a furnace at 1475°C and held at temperature for 6 hours. The melt was then poured on a graphite plate, and the resulting patty of glass was annealed at 425°C.

### EXAMPLE 3

The following example is for solution doping neodymium oxide into an antimony silicate glass. 6.71 g of neodymium nitrate hydrate, Nd(NO₃)₃·6H₂O, was weighed and added to 10 g of 15 MΩ deionized water in a Nalgene™ beaker. A teflon-coated magnetic stir bar was added to the beaker and the solution was stirred. The solution was added to 224 g of 100 mesh high purity sand (SiO₂) in a 2 liter wide-mouth plastic bottle. The bottle was capped, sealed shut with tape, and placed on a roller mill. The mill turned the bottle at 50 rpm for 2 hours. The doped sand was transferred to a 1800 cc fused silica crucible, covered, and was then placed in a furnace at 450°C. After 24 hours, the crucible was removed from the furnace and allowed to cool to room temperature. The doped sand was combined with 354 grams of high-purity antimony oxide and 17.1 grams of aluminum fluoride in a 2 liter plastic bottle. The bottle was capped, sealed with tape, and placed on a roller mill at 50 rpm for 12 hours. After rolling, the batch was transferred to a 600 cc fused silica crucible, covered, and heated to 425°C for 16 hours to drive of residual water from the antimony oxide. The batch was transferred to a furnace at 1475°C and held at temperature for 16 hours. The melt was then poured on a graphite plate, and the resulting patty of glass was annealed at 450°C.

### EXAMPLE 4

The following example is for solution doping thulium oxide into an antimony silicate glass. Deuterium oxide was used as a solvent. 6.62 g of thulium chloride hydrate, TmCl₃·6H₂O, was weighed and added to 60 g of 99.9% (isotopic) deuterium oxide, D₂O in a Nalgene™ beaker. A teflon-coated magnetic stir bar was added to the beaker and the solution was stirred. 41.7 g of aluminum chloride hydrate, AlCl₃·6H₂O, was added to the solution. The solution was added to 726 g of 50 mesh high purity SiO₂ in a 2 liter wide-mouth plastic bottle. The bottle was capped, sealed shut with tape, and placed on a roller mill. The mill turned the bottle at 50 rpm for 2 hours. The doped sand was transferred to a 1800 cc fused silica crucible, covered, and was then placed in a furnace at 450°C. After 4 hours, the furnace temperature was increased to 1000°C for 16 hours, and then reduced to room temperature. The doped sand was combined with 1227 grams of high-purity antimony oxide, 27.8 grams of aluminum fluoride, 33.7 grams of γ-alumina, and 59.1 grams of KBr in a 4 liter plastic bottle. The bottle was capped, sealed with tape, and placed on a roller mill at 50 rpm for 12 hours. After rolling, the batch was transferred to a 1800 cc fused silica crucible, covered, and heated to 500°C for 16 hours to drive of residual water from the antimony oxide. The batch was transferred to a furnace at 1500°C and held at temperature for 16 hours. The melt was then poured on a graphite plate, and the resulting patty of glass was annealed at 450°C.

### EXAMPLE 5

The following example is for solution doping erbium oxide into an antimony silicate glass using deuterium oxide as the solvent and the entire batch as the powder substrate 6.13 g of erbium chloride hydrate, ErCl₃·6H₂O, was weighed and added to 10 g of 99.9% (isotopic) deuterium oxide, D₂O in a Nalgene™ beaker. A teflon-coated magnetic stir bar was added to the beaker and the solution was stirred. The solution was added to 726 g of 50 mesh high purity SiO₂, 1021 grams of high-purity antimony oxide, 13.5 grams of aluminum fluoride, and 95.7 grams of KBr in a 4 liter plastic bottle. The bottle was capped, sealed with tape, and placed on a roller mill at 50 rpm for 2 hours. After rolling, the batch was transferred to a 1800 cc fused silica crucible, covered, and heated to 500°C for 16 hours in flowing air to drive off water from the batch. The batch was transferred to a furnace at 1475°C and held at temperature for 16 hours. The melt was then poured on a graphite plate, and the resulting patty of glass was annealed at 500°C.

### EXAMPLE 6

The following example is for solution doping ytterbium oxide into an antimony silicate glass. 6.18 g of ytterbium chloride hydrate, YbCl₃·6H₂O, was weighed and added to 60 g of 99.9% (isotopic) deuterium oxide, D₂O in a Nalgene™ beaker. A teflon-coated magnetic stir bar was added to the beaker and the solution was stirred. 38.5 g of aluminum chloride hydrate, AlCl₃·6H₂O, was added to the solution. After all solids were dissolved, the solution was added to 723 g of 50 mesh high purity SiO₂ in a 2 liter wide-mouth plastic bottle. The bottle was capped, sealed shut with tape, and placed on a roller mill. The mill turned the bottle at 50 rpm for 4 hours. The doped sand was transferred to a 1800 cc fused silica crucible, covered, and was then placed in a furnace at 750°C. After 4 hours, the furnace temperature was increased to 1000°C for 16 hours, and then reduced to room temperature. The doped sand was combined with 958 grams of high-purity antimony oxide, 13.3 grams of aluminum fluoride, and 94.5 grams of potassium bromide, KBr, in a 4 liter plastic bottle. The bottle was capped, sealed with tape, and placed on a roller mill at 50 rpm for 12 hours. After rolling, the batch was transferred to a 1800 cc fused silica crucible, covered, and heated to 500°C for 16 hours to drive of residual water from the antimony oxide. The batch was transferred to a furnace at 1500°C and held at temperature for 16 hours. The melt was then poured on a graphite plate, and the resulting patty of glass was annealed at 450°C.

### EXAMPLE 7

The following example is for solution doping erbium oxide into a sodium aluminosilicate glass using alcohol as the solvent. 5.51 g of erbium nitrate hydrate, Er(NO₃)₃·5H₂O, was weighed and added to 20 g of 2-propanol (isopropyl alcohol) in a Teflon beaker. A teflon-coated magnetic stir bar was added to the beaker and the solution was stirred. After all solids were dissolved, the solution was added to 500 g of 50 mesh high purity SiO₂ in a 1 liter wide-mouth plastic bottle. The bottle was capped, sealed shut with tape, and placed on a roller mill. The mill turned the bottle at 50 rpm for 4 hours. The doped sand was transferred to a 1800 cc fused silica crucible, covered, and was then placed in a furnace at 160°C under flowing oxygen. After 4 hours, the furnace temperature was increased to 1000°C for 16 hours, and then reduced to room temperature. The doped sand was combined with 171 grams of high-purity aluminum oxide, 83.4 grams of aluminum fluoride, and 203 grams of sodium carbonate in a 2 liter plastic bottle. The bottle was capped, sealed with tape, and placed on a roller mill at 50 rpm for 12 hours. After rolling, the batch was transferred to a 1800 cc fused silica crucible, covered, and heated to 675°C for 16 hours to drive of residual water from the batch. The batch in the crucible was transferred to a furnace at 1650°C and held at temperature for 16 hours. The melt was then poured on a graphite plate, and the resulting patty of glass was annealed at 625°C.

### EXAMPLE 8

The following example is for solution doping chromium oxide into a potassium aluminosilicate glass using water as the solvent. 6.09 g of potassium chromate, K₂CrO₄, was weighed and added to 15 g of 15 MΩ deionized water in a Nalgene™ beaker. A teflon-coated magnetic stir bar was added to the beaker and the solution was stirred. After all solids were dissolved, the solution was added to 1129 g of 50 mesh high purity SiO₂ in a 4 liter wide-mouth plastic bottle. The bottle was capped, sealed shut with tape, and placed on a roller mill. The mill turned the bottle at 50 rpm for 4 hours. The doped sand was transferred to a 1800 cc fused silica crucible, covered, and was then placed in a furnace at 750°C. After 4 hours, the furnace temperature was reduced to room temperature. The doped sand was combined with 320 grams of high-purity aluminum oxide, 1608 grams of magnesium nitrate tetrahydrate, Mg(NO₃)₂·6H₂O, and 342 grams of potassium carbonate, and 93.5 grams of potassium chloride in a 4 liter plastic bottle. The bottle was capped, sealed with tape, and placed on a roller mill at 50 rpm for 12 hours. After rolling, the batch was transferred to a 1800 cc platinum crucible, covered, and heated to 675°C for 16 hours to drive decomposition of the magnesium nitrate and drive absorbed water from the batch. The batch was transferred to a furnace at 1650°C and held at temperature for 20 hours. The melt was then poured on a stainless steel plate, and the resulting patty of glass was annealed at 675°C.

### ANALYSIS

Non-radiative transfer between erbium atoms becomes likely when erbium atoms are too close together. Because photons are transferred between the ions rather than to the surrounding medium, a pump photon is lost without a desired emission photon of the correct wavelength. This "lost" pump photon shows up as attenuation within the erbium absorption bands in excess of the baseline passive loss. It is referred to as unbleachable loss because it is not possible to add enough pump power to obtain from these ions emission at the appropriate wavelength, hence, an increase in pump power cannot bleach the absorption. Unbleachable loss is conveniently represented as a percentage of the peak absorption of interest―for erbium, this is typically the 1480 nm absorption. As an example, a 3% unbleachable loss for a fiber with a peak erbium 1480 nm absorption of 100 dB/m corresponds to 3 dB/m. High unbleachable loss greatly reduces pump power conversion efficiency, and leads to poor amplifier performance. The inventive method greatly reduces/eliminates unbleachable loss, as demonstrated below.

Two fibers were prepared via a double crucible process. The compositions of the core and clad glasses (mol%, oxide basis) were as follows:

| | Core | Clad |
|---|---|---|
| SiO₂ | 71.8 | 77 |
| 2(AlF₃) | 3.0 | 2 |
| Al₂O₃ | 0.4 | |
| Sb₂O₃ | 24.76 | 21 |
| Br₂O₃ | 0.04 | |

The core for fiber 1 was prepared by combining appropriate amounts of 100 mesh silica, powdered aluminum fluoride, antimony oxide, and erbium oxide so as to obtain a 600 gram batch. The ingredients were mixed by shaking them together in a sealed plastic bottle for 30 minutes. The batch was transferred to a 600 cc refractory silica crucible and heated for 12 hours at 425°C. After this time, the crucible was transferred to a SiC glowbar furnace at 1475°C and held at this temperature for six hours. The melt was poured into a graphite mold, annealed for 1 hour at 425°C, and cooled to room temperature. The core for Fiber 2 was prepared as in Example 2.

The clad glass for both fibers was prepared by combining appropriate amounts of 100 mesh silica, powdered aluminum fluoride and antimony oxide so as to obtain a 1.8 kg batch. The ingredients were mixed by shaking them together in a sealed plastic bottle for 30 minutes. The batch was transferred to a 1800 cc refractory silica crucible and heated for 12 hours at 425°C. After this time, the crucible was transferred to a SiC glowbar furnace at 1525°C and held at this temperature for six hours. The melt was poured into a graphite mold, annealed for 1 hour at 475°C, and cooled to room temperature.

The double crucible fiber draw was performed using concentric silica tubes with tapered ends. The inner crucible was a fused silica tube with 6 mm inner diameter (ID) and 8 mm outer diameter (OD). The end of the tube was tapered so as to produce an orifice 1 mm in diameter. The outer crucible was a fused silica tube with 30 mm ID and 34 mm OD tapered so as to produce an orifice 3.4 mm in diameter. The orifice of the inner crucible was suspended approximately 6 mm above the orifice of the outer crucible on a x-y stage. The apparatus was lowered into the hot zone of a graphite resistance furnace. A fused silica muffle extended outside of the furnace to avoid reduction of antimony oxide on the surface of the fiber.

The core and clad glasses were saw-cut to shape using a SiC blade. The pieces were acid leached in 5% HNO₃/5% HF for ten minutes, and dried at 160°C. Approximately 5 grams of core was loaded into the inner crucible, and approximately 100 grams of clad was loaded into the outer crucible. The furnace set-point was then raised to 1400°C. An alumina rod was placed against the orifice of the outer crucible to keep the glass in place until fiberization was to commence. After ten minutes, the alumina rod was removed, and fiber was drawn. The draw rate was approximately 12 meters per minute. The height of the inner crucible was adjusted to produce the desired core size, approximately 6 microns.

After fiberization was complete, the passive loss of the fibers were measured via standard cut-back methods using a calibrated white light source. Unbleachable loss data for the 1550 nm erbium emission band were performed using a 1480 nm single mode diode laser pigtailed to CS980. Power was increased until maximum inversion was obtained, a cut-back was performed, and the measurement was repeated. The difference in power out after the cut-back corresponds to the unbleachable loss. It is the sum of the baseline passive loss and losses associated with non-radiative decay of erbium atoms, e.g., cooperative cross-relaxation.

If no unbleachable loss were present beyond the minimum in passive loss, then the difference in power out obtained in the unbleachable loss experiment would be equal to the passive loss. Unbleachable loss in excess of passive loss represents erbium ions so close to one another that they cooperatively up-convert to higher energies rather than emit light at 1550 nm. This converts pump power into wavelengths of light that produce no amplification at 1550 nm, and is therefore highly undesirable. Fiber 1, in which the core was prepared by conventional batch melting methods, showed an unbleachable loss of 2.4 dB/m above the passive loss. The peak in erbium absorption was approximately 40 dB/m in both cases, so this loss corresponds to 4.5% of the peak absorption. This is far too high to make a viable amplifier or an efficient fiber laser.

Fiber 2, in which the core was prepared by the inventive method (Example 2), showed an unbleachable loss of 0.1 dB/m above passive loss, or 0.25% of the peak absorption. This fiber was subsequently used to make an efficient 1480 nm pumped C-band amplifier.

Subsequent fibers made using the inventive method (particularly example 2 above) have repeatedly shown unbleachable loss due to erbium non-radiative energy transfer of 1% or less, even at erbium contents as high as 85 dB/m peak absorption (~3x10¹⁹ ions/cc).

It is to be clearly understood that the present invention has been described by way of example only and with reference to a number of preferred embodiments. Modifications and/or alterations to the invention which would be obvious to a person skilled in the art based upon the disclosure herein, are considered to fall within the intended scope and spirit of the invention.

## Claims

1. A method for the production of glass suitable for use in an optical fiber, comprising:
dissolving an optically active component in a solvent to form a solution;
mixing the solution and a powder substrate, wherein the powder substrate is insoluble in the solvent; and
melting the solution and powder substrate to form glass at a temperature or temperature range that causes melt viscosities at less than or equal to 100,000 poise.

2. A method according to Claim 1, further comprising drying the solvent and powder substrate prior to melting the powder substrate.

3. A method according to Claim 2, further comprising decomposing the optically active component.

4. A method according to Claim 1, wherein the optically active component is in a precursor form.

5. A method according to Claim 4, wherein a co-dopant is added to the solution.

6. A method according to Claim 5, wherein the precursor is an organic salt, inorganic salt, or organometallic compound.

7. A method according to Claim 6, wherein the precursor is a nitrate, sulfate, halide, formate, acetate, oxalate, alkoxide, or Grinard reagent.

8. A method according to Claim 7, wherein the solvent is a member of the group consisting of: water, alcohol, ketone, aldehyde, organic acid, inorganic acid, base, liquid ammonium, or molten salt.

9. A method according to Claim 1, wherein the powder substrate has a particle size of about 50 to about 1200 mesh.

10. A method according to Claim 9, wherein the mass ratio of solution to powder is from about 0.5 to about 10.
